Europäisches Patentamt

European Patent Office

Office européen des brevets

(19)

(11) Veröffentlichungsnummer : **0 343 473 B1**

(12)

# EUROPÄISCHE PATENTSCHRIFT

(45) Veröffentlichungstag der Patentschrift :
**23.09.92 Patentblatt 92/39**

(51) Int. Cl.⁵ : **C08J 9/14,** C08J 9/16,
// (C08L25/04, 71:12)

(21) Anmeldenummer : **89108685.2**

(22) Anmeldetag : **13.05.89**

(54) **Expandierbare Polymere in Partikelform.**

(30) Priorität : **25.05.88 DE 3817631**

(43) Veröffentlichungstag der Anmeldung :
**29.11.89 Patentblatt 89/48**

(45) Bekanntmachung des Hinweises auf die
Patenterteilung :
**23.09.92 Patentblatt 92/39**

(84) Benannte Vertragsstaaten :
**BE DE ES FR GB IT NL**

(56) Entgegenhaltungen :
**US-A- 2 681 321
US-A- 3 018 257
US-A- 3 175 985
US-A- 4 727 093
CHEMICAL ABSTRACTS, Band 85, Nr. 2, 12.
Juli 1976, Seite 53, Zusammenfassung Nr.
6703h, Columbus, Ohio, US; JP-A-76 17
981(TOSHIN K.K.) 13-02-1976**

(73) Patentinhaber : **BASF Aktiengesellschaft
Carl-Bosch-Strasse 38
W-6700 Ludwigshafen (DE)**

(72) Erfinder : **Weber, Heinz, Dr.
Am Wehrhaus 26
W-6718 Gruenstadt (DE)**
Erfinder : **Nintz, Eckhard, Dr.
An der Froschlache 3
W-6700 Ludwigshafen (DE)**
Erfinder : **Walter, Manfred, Dr.
Hans-Purrmann-Allee 18
W-6720 Speyer (DE)**
Erfinder : **Ballweber, Dieter
Schubertstrasse 11
W-6710 Frankenthal (DE)**
Erfinder : **Ostermayer, Bertram, Dr.
Pfaffenpfad 14
W-6701 Roedersheim-Gronau (DE)**

## Beschreibung

Die Erfindung betrifft neuartige expandierbare Polymere in Partikelform, die für die Herstellung von Schaumstoff-Formteilen beliebiger Gestalt mit hoher Wärmeformbeständigkeit geeignet sind.

Polystyrolschaumstoffe haben auf dem Markt der Dämmstoffe und Verpackungsstoffe eine große Bedeutung erlangt. Sie besitzen jedoch eine unbefriedigende Wärmeformbeständigkeit.

Aus der DE-A 32 20 856 ist ein Verfahren zur Herstellung von Schaumstoffen mit hoher Wärmeformbeständigkeit bekannt, bei dem ein Gemisch aus 95 bis 20 Gew.% eines Styrolpolymerisats und 5 bis 80 Gew.% Polyphenylenether in der Schmelze mit Pentan vermischt und anschließend extrudiert wird. Derartige Schaumstoffe können jedoch nur in Form von Strängen oder Platten hergestellt werden. Das Verfahren ist für die Herstellung von Schaumstoff-Formteilen beliebiger Gestalt nicht geeignet.

Aus der EP-A 241 258 ist ein Verfahren zur Herstellung von Schaumstoffen mit besonders niedriger Dichte bekannt, bei dem ein Gemisch aus mindestens 50 Gew.% Polystyrol, 0,06 bis 15 Gew.% Polyphenylenether und 0,05 bis 3 Gew.% aromatischem Phosphat in der Schmelze mit einem Fluorchlorkohlenwasserstoff als Treibmittel vermischt und anschließend extrudiert wird. Dabei wirkt das aromatische Phosphat als Weichmacher und führt zu Schaumstoffen mit unbefriedigender Wärmeformbeständigkeit. Die als Treibmittel verwendeten Fluorchlorkohlenwasserstoffe belasten die Umwelt, da sie die Ozonschicht der Atmosphäre schädigen. Das Extrusionsverfahren ist weiterhin für die Herstellung von Schaumstoff-Formteilen beliebiger Gestalt nicht geeignet.

Aufgabe der vorliegenden Erfindung war es, ein expandierbares Polymeres in Partikelform zu entwickeln, aus dem durch Expandieren Schaumstoffpartikel erhältlich sind, die durch Verschweißen zu Formkörpern beliebiger Gestalt weiter verarbeitet werden können, die eine hohe Wärmeformbeständigkeit aufweisen. Aufgabe war es ferner, expandierbare Polymere in Partikelform zu entwickeln, die beim Expandieren Schaumstoffpartikel mit besonders niedriger Schüttdichte liefern und die mit hohem Durchsatz pro Zeiteinheit vorgeschäumt werden können. Es war weiterhin Aufgabe der Erfindung, ein Verfahren zur Herstellung expandierbarer Polymerer in Partikelform zu entwickeln, das bei verhältnismäßig niedrigen Temperaturen und niedrigen Drücken durchgeführt werden kann.

Es wurde nun überraschenderweise gefunden, daß die Aufgaben gelöst werden durch ein expandierbares Polymeres in Partikelform auf der Basis von Styrolpolymeren und Polyphenylenether, die als Treibmittel ein Gemisch aus aliphatischen oder cycloaliphatischen Kohlenwasserstoffen einerseits und aromatischen Kohlenwasserstoffen, Alkoholen, Ketonen, Ethern, Estern und/oder Chlorkohlenwasserstoffen andererseits enthalten.

Gegenstand der Erfindung sind somit expandierbare Polymere in Partikelform, enthaltend

a) 20 bis 94,9 Gew.% eines Styrolpolymerisats,

b) 0,1 bis 75 Gew.% eines Polyphenylenethers,

c) 5 bis 20 Gew.% eines Treibmittelgemisches aus

    c1) aliphatischen oder cycloaliphatischen gesättigten Kohlenwasserstoffen mit 3 bis 7 C-Atomen und

    c2) einem aromatischen gesättigten Kohlenwasserstoff mit 7 bis 8 C-Atomen

    einem Alkohol mit 2 bis 4 C-Atomen,

    einem Keton mit 3 bis 5 C-Atomen,

    einem cyclischen Ether mit 4 bis 6 C-Atomen,

    einem aliphatischen Ether mit 4 bis 6 C-Atomen

    einem Ester mit 4 bis 6 C-Atomen und/oder

    einem Chlorkohlenwasserstoff mit 1 bis 2 C-Atomen und 2 bis 3 Chloratomen

    im Gewichtsverhältnis c1:c2 zwischen 50:1 und 1:1, sowie gegebenenfalls

d) übliche Zusatzstoffe in wirksamen Mengen.

Gegenstand der Erfindung ist ferner ein Verfahren zur Herstellung derartiger expandierbarer Polymerer in Partikelform, bei dem man ein inniges Gemisch aus a) einem Styrolpolymerisat, b) einem Polyphenylenether und gegebenenfalls d) üblichen Zusatzstoffen in wirksamen Mengen, in Partikelform in wäßriger Suspension mit c) einem Treibmittelgemisch aus

c1) aliphatischen oder cycloaliphatischen gesättigten Kohlenwasserstoffen mit 3 bis 7 C-Atomen und

c2) einem aromatischen gesättigten Kohlenwasserstoff mit 7 bis 8 C-Atomen,

    einem Alkohol mit 2 bis 4 C-Atomen,

    einem Keton mit 3 bis 5 C-Atomen,

    einem cyclischen Ether mit 4 bis 6 C-Atomen,

    einem aliphatischen Ether mit 4 bis 6 C-Atomen,

    einem Ester mit 4 bis 6 C-Atomen und/oder

    einem Chlorkohlenwasserstoff mit 1 bis 2 C-Atomen und 2 bis 3 Chloratomen

bei einer Temperatur von 100 bis 250°C und erhöhtem Druck imprägniert.

Gegenstand der Erfindung ist weiterhin ein Verfahren zur Herstellung von Schaumstoffpartikeln der Dichte 5 bis 200 kg/m³, bei dem man entweder die bei der Herstellung der expandierbaren Polymeren resultierende heiße Suspension in eine Atmosphäre niederen Drucks entspannt oder nach dem Abkühlen der Suspension die treibmittelhaltigen Partikel abtrennt und durch Behandeln mit einem heißen Gas aufschäumt.

Styrolpolymerisate im Sinne dieser Erfindung sind Polystyrol und Copolymere des Styrols, die mindestens 50 Gew.% Styrol einpolymerisiert enthalten. Als Comonomere kommen z.B. in Betracht $\alpha$-Methylstyrol, kernhalogenierte Styrole, Acrylnitril, Ester der (Meth)acrylsäure mit 1 bis 8 C-Atomen, N-Vinylcarbazol, Maleinsäureanhydrid und/oder auch geringe Mengen an Verbindungen mit zwei polymerisierbaren Doppelbindungen, wie Butadien, Divinylbenzol oder Butandioldiacrylat.

Styrolpolymerisate im Sinne dieser Erfindungen sind ferner die sogenannten schlagzähen Polystyrole, d.h. Polymere mit einem Gehalt an mindestens 50 Gew.% einpolymerisiertem Styrol, die als Pfropfgrundlage oder in feinverteiltem Zustand einen Kautschuk, wie Polybutadien, Polyisopren, Styrol-Butadien-Kautschuk, Acrylatkautschuk o.ä. enthalten. Geeignet sind somit auch alle handelsüblichen ABS und ASA Styrolcopolymeren.

Die expandierbaren Polymeren enthalten das Styrolpolymerisat im allgemeinen in einer Menge von 20 bis 94,9 Gew.%, vorzugsweise 30 bis 93 Gew.%, insbesondere 40 bis 80 Gew.%.

Als Polyphenylenether wird vorzugsweise das handelsübliche Poly(2,6-dimethyl-1,4-phenylenoxid) verwendet, und zwar in einer Menge von 0,1 bis 75 Gew.%, vorzugsweise 2 bis 65 Gew.%. Bei Verwendung von bis zu 10 Gew.% erhält man Produkte, die beim Expandieren Schaumstoffpartikel mit besonders niedrigem Schüttgewicht liefern. Die Wärmeformbeständigkeit des aus den Produkten hergestellten Schaumstoffs steigt mit zunehmendem Gehalt an Polyphenylenether an.

Die expandierbaren Polymeren der Erfindung enthalten als Treibmittel ein Gemisch aus einer Komponente c1) mit einer nur unbedeutenden Weichmacherwirkung und einer Komponente c2) mit einer bedeutenden Weichmacherwirkung. Als Komponente c1) werden aliphatische oder cycloaliphatische gesättigte Kohlenwasserstoffe mit 3 bis 7 C-Atomen verwendet, wie Propan, Butan, n-Pentan, i-Pentan, Hexan, Heptan, Cyclohexan und Methylcyclohexan oder deren Gemische. Als Komponente c2) werden verwendet aromatische gesättigte Kohlenwasserstoffe mit 7 bis 8 C-Atomen, wie Toluol und Xylol; Alkohole mit 2 bis 4 C-Atomen, wie Ethanol, Propanol, i-Propanol, n-Butanol, i-Butanol und t-Butanol; Ketone mit 3 bis 5 C-Atomen, wie Aceton, Methylethylketon und Diethylketon; cyclische Ether mit 4 bis 6 C-Atomen, wie Dioxan, Dimethyldioxan und Tetrahydrofuran; aliphatische Ether mit 4 bis 6 C-Atomen, wie Diethylether und Diisopropylether; Ester mit 4 bis 6 C-Atomen, wie Ethylacetat, Methylpropionat, Propylacetat und Butylacetat; und/oder Chlorkohlenwasserstoffe mit 1 bis 2 C-Atomen und 2 bis 3 Chloratomen, wie Methylenchlorid, Chloroform, Dichlorethan und Trichlorethan; sowie Gemische der genannten Stoffe.

Das Treibmittel ist in den expandierbaren Polymeren in einer Menge von 5 bis 20 Gew.%, vorzugsweise 7 bis 18 Gew.% enthalten. Das Gewichtsverhältnis der Komponenten c1:c2 liegt zwischen 50:1 und 1:1, vorzugsweise zwischen 20:1 und 2:1.

Die weichmachende Treibmittelkomponente c2 setzt den Erweichungspunkt des Gemisches aus Styrolpolymerisat und Polyphenylenoxid herab und ermöglicht dadurch eine Erniedrigung der Temperatur, bei der das Polymerengemisch mit dem Treibmittel imprägniert wird. Mit der Erniedrigung dieser Herstellungstemperatur ist gleichzeitig auch eine entsprechende Erniedrigung des Druckes bei der Imprägnierung verbunden.

Die Komponenten c2 setzt gleichzeitig auch die Erweichungstemperatur der expandierbaren Polymeren herab und ermöglicht ein Aufschäumen bei niederer Temperatur und hohem Durchsatz pro Zeiteinheit. Nach dem Aufschäumen der expandierbaren Polymeren enthalten die Schaumstoffpartikel noch in der Regel geringe Mengen der Treibmittelkomponente c2). Sie lassen sich daher besonders leicht zu Formkörpern verschweißen.

Die expandierbaren Polymeren können daneben übliche Hilfsstoffe in üblichen wirksamen Mengen enthalten, wie Farbstoffe, Pigmente, Antistatika, Gleitmittel, Flammschutzmittel und Füllstoffe.

Geeignete Flammschutzmittel sind beispielsweise Hexabromcyclododecan, Monochlorpentabromcyclohexan, Trisnonylphenylphosphit und Triphenylphosphinoxid. Polymergemisches. Die optimale Temperatur läßt sich leicht durch einen Vorversuch ermitteln. Sie liegt zwischen 100 und 250°C. Der Druck während des Imprägnierens ist im wesentlichen durch den Dampfdruck des Wassers und des Treibmittels bestimmt und liegt im allgemeinen zwischen 8 und 60 bar.

Nach Erreichen der Erweichungstemperatur hält man die Dispersion noch einige Zeit, z.B. 1 bis 100 Minuten bei dieser Temperatur. Danach wird abgekühlt und das expandierbare Polymere aus der Suspension abgetrennt, gegebenenfalls gewaschen und getrocknet.

Man kann aber auch ohne Zwischenisolierung der expandierbaren Polymeren direkt Schaumstoffpartikel herstellen, indem man die heiße Dispersion am unteren Ende des Druckkessels abläßt und entspannt, während man Druck und Temperatur im Kessel praktisch konstant hält. Die Partikel schäumen beim Entspannen auf niederen Druck spontan auf. Sie werden dann von der wäßrigen Phase abgetrennt und gegebenenfalls gewaschen und getrocknet.

Schaumstoffpartikel erhält man auch dann, wenn das expandierbare Polymere mit einem heißen Gas behandelt wird, beispieslweise mit Dampf oder erhitztem Stickstoff oder Luft. Die Temperatur des Gases liegt dabei oberhalb der Erweichungstemperatur der expandierbaren Polymeren. Das Aufschäumen kann bei PPE-Gehalten bis zu ca. 30 % in üblichen Verschäumern bei Dampftemperaturen von etwa 100°C erfolgen. Höhere PPE-Gehalte erfordern Dampftemperaturen bis 180°C und vorgeheizte Vorschäumer.

Die Schaumstoffpartikel können nach dem Erkalten noch weiter aufgeschäumt werden, indem man sie ein weiteres Mal oder noch weitere Male mit heißem Gas behandelt. Die Dichte der erhaltenen Schaumstoffpartikel liegt zwischen 5 und 200 kg/m³, insbesondere zwischen 10 und 100 kg/m³.

Die erhaltenen Schaumstoffpartikel sind in hervorragender Weise für die Herstellung von Schaumstoff-Formteilen beliebiger Gestalt geeignet. Dazu füllt man sie in an sich bekannter Weise in eine Form ein, die nicht gasdicht schließt, und erhitzt sie darin auf Temperaturen oberhalb des Erweichungspunktes. Dabei erweichen die Partikel, dehnen sich aus und schweißen zu einem Formkörper zusammen, der der Gestalt des Formeninnenraums entspricht.

Die Schaumstoffpartikel und die daraus hergestellten Formkörper zeichnen sich durch eine gute Wärmeformbeständigkeit und niedrige Dichte aus. Sie finden Verwendung als Isoliermaterialien, als Verpackungen, und in einer Vielzahl von weiteren Anwendungen, in denen die Eigenschaften der Wärme- und Kälteisolation, der hohen Steifigkeit, der Wärmeformbeständigkeit und der geringen Dichte erwünscht sind.

Flammschutzmittel werden im allgemeinen in einer wirksamen Menge von 0,5 bis 8, vorzugsweise 2 bis 6 Gew.%, bezogen auf die Summe der Polymeren a) und b) verwendet.

Die einzelnen Komponenten sind in den expandierbaren Polymeren in praktisch homogener Verteilung enthalten. Die expandierbaren Polymeren haben Partikelform und sind in der Regel kugel-, perl- oder tropfenförmig. Sie besitzen im allgemeinen einen mittleren Durchmnesser zwischen 0,2 und 4 mm, vorzugsweise 0,3 bis 3 mm.

Die Herstellung der erfindungsgemäßen expandierbaren Polymeren erfolgt durch Imprägnieren der Styrolpolymerisat-Polyphenylenether-Partikel in wäßriger Suspension mit dem Treibmittelgemisch bei erhöhter Temperatur und erhöhtem Druck.

Dabei geht man aus von einem innigen Gemisch des Styrolpolymerisats mit dem Polyphenylenether und gegebenenfalls Zusatzstoffen, wie es beispielsweise durch Vermischen der Komponenten in einem Extruder erhalten wird. Das Gemisch soll in Partikelform und einem mittleren Durchmesser zwischen 0,2 und 4 mm, vorzugsweise 0,3 bis 3 mm vorliegen. Das durch Heißabschlag oder Kaltabschlag des Extrudats erhältliche Granulat ist hierfür geeignet.

Die Imprägnierung mit dem Treibmittel erfolgt in einem druckfesten Rührgefäß. Man arbeitet in wäßriger Suspension, im allgemeinen unter Verwendung von 90 bis 350 Teilen, vorzugsweise 100 bis 300 Teilen Wasser pro 100 Teile Polymeres.

Um ein Verkleben der Polymerpartikel zu verhindern, arbeitet man zweckmäßig in Gegenwart von bekannten Suspendierhilfsmitteln, wie feinstteiliges Aluminiumoxid, basisches Magnesiumcarbonat, basisches Zinkcarbonat, Calciumcarbonat, Calciumphosphat, Kieselgur. Als Dispergierhilfsmittel sind auch übliche wasserlösliche Polymere geeignet, die die Viskosität der wäßrigen Phase stark erhöhen, wie Polyvinylpyrrolidon und Polyvinylalkohol. Geeignet ist auch ein feinteiliges Emulsionspolymerisat aus der Flüssigphase (Serum) einer Styrol-Emulsionspolymerisation.

Das Dispergierhilfsmittel wird im allgemeinen in Mengen von 0,1 bis 10 Teile, vorzugsweise 0,1 bis 4,0 Teile pro 100 Teile Wasser verwendet.

Die Dispersion wird zusammen mit dem Treibmittel auf eine Temperatur erhitzt, bei der das Polymere erweicht. Diese Erweichungstemperatur liegt in Anwesenheit des Treibmittels, welches zumindest zum Teil bereits in der Kälte bzw. während des Aufheizvorgangs in die Polymerpartikel eindiffundiert, in der Regel niedriger als die Erweichungstemperatur des reinen

Die in den Beispielen genannten Teile sind Gewichtsteile.

Beispiele 1 bis 4

In einem Druckkessel werden 100 Teile Polystyrol/Polyphenylenether-Granulat der in Tabelle 1 angegebenen Zusammensetzung mit einem mittleren Teilchendurchmesser von 1,2 mm zusammen mit 120 Teilen Wasser, sowie 1,5 Teilen Tricalciumphosphatpulver und 0,15 Teilen Natriumdodecylbenzolsulfonat, gegeben. Das Ganze wird unter Rühren auf 125°C aufgeheizt und bei Erreichen der Temperatur werden Tetrahydrofuran und Pentan (~ 75 % n-, 25 % iso-Pentan) als Treibmittel innerhalb 2 Stunden nachdosiert. Anschließend wird 8 Std. bei 125°C gehalten. Danach wird der Ansatz abgekühlt und die Partikel von der wäßrigen Phase getrennt. Zur Beseitigung des den Partikeln anhaftenden überschüssigen Tricalciumphosphats wird mit 30 %iger Salpetersäure gewaschen. Nach Neutralwaschen werden die Partikel im Luftstrom getrocknet. Die Eigenschaften der erhaltenen Produkte sind in Tabelle 2 zusammengestellt.

Beispiele 5 bis 6

Die Versuche wurden analog Beispiel 1 durchgeführt, jedoch wurde anstelle von Tetrahydrofuran als weichmachendes Treibmittel Diisopropylether eingesetzt (Tabelle 1). Die Eigenschaften der erhaltenen Produkte sind in Tabelle 2 zusammengestellt.

Beispiele 7 bis 8

Die Versuche wurden analog Beispiel 1 durchgeführt, jedoch wurde anstelle von Tetrahydrofuran als weichmachendes Treibmittel Methylethylketon eingesetzt sowie die Imprägniertemperatur auf 130°C heraufgesetzt. Details siehe Tabelle 1. Die Schäumeigenschaften der treibmittelhaltigen Granulate sind in Tabelle 2 zusammengestellt.

Beispiele 9 bis 10

Die Versuche wurden analog den Beispielen 1 bis 4 durchgeführt, jedoch wurde anstelle von Tetrahydrofuran als weichmachendes Treibmittel n-Butylacetat eingesetzt (Tabelle 1) sowie die Imprägniertemperatur bei 120°C gehalten. Die Eigenschaften der erhaltenen Produkte sind in Tabelle 2 zusammengestellt.

Vergleichsbeispiel 11

Der Versuch wurde analog Beispiel 7 durchgeführt, jedoch wurde ohne Zusatz eines weichmachenden Treibmittels (2) nur mit Pentan nachimprägniert. Es wurde ein Material erhalten, dessen Schäumeigenschaften, gekennzeichnet durch eine erhöhte Schüttdichte der geschäumten Partikeln, verschlechtert waren. Details siehe Tabelle 2.

Zur Bestimmung der Wärmeformbeständigkeit wurden die Schaumstoffformkörper jeweils 3 Tage bei 80°C im Trockenschrank gehalten, um restlichen Weichmacher auszutreiben.

Tabelle 1    Zusammensetzung der Ansätze

| Beispiel | Zusammensetzung des Polymerengemisches | Suspendier-hilfsmittel | Treibmittel (1) | weichmachendes Treibmittel, (2) | maximale Imprägniertemperatur |
|---|---|---|---|---|---|
| 1 | 30 % Polyphenylen-ether, 70 % Polystyrol | Tricalcium-phosphat-Pulver + Na-dodecyl-benzolsul-fonat | 10 % Pentan | 3 % Tetrahydrofuran | 125°C |
| 2 | 18 % Polyphenylen-ether, 82 % Polystyrol | " | " | 2 % Tetrahydrofuran | " |
| 3 | 14 % Polyphenylen-ether, 86 % Polystyrol | " | " | 2 % Tetrahydrofuran | " |
| 4 | 10 % Polyphenylen-ether, 90 % Polystyrol | " | " | 0,5 % Tetrahydrofuran | " |
| 5 | 30 % Polyphenylen-ether, 70 % Polystyrol | " | " | 2 % Diisopropylether | " |
| 6 | 30 % Polyphenylen-ether, 70 % Polystyrol | " | " | 1 % Diisopropylether | " |
| 7 | 30 % Polyphenylen-ether, 70 % Polystyrol | " | " | 2 % Methylethylketon | 130°C |
| 8 | 30 % Polyphenylen-ether, 70 % Polystyrol | " | " | 1 % Methylethylketon | " |
| 9 | 30 % Polyphenylen-ether, 70 % Polystyrol | " | " | 2 % n-Butylacetat | 120°C |
| 10 | 30 % Polyphenylen-ether, 70 % Polystyrol | " | " | 1 % n-Butylacetat | " |
| Ver-gleichs-beispiel 11 | 30 % Polyphenylen-ether, 70 % Polystyrol | " | 15 % Pentan | - | 130°C |

EP 0 343 473 B1

Tabelle 2    Rohstoff- und Schäumeigenschaften der expandierbaren Polyphenylenther/Polystyrolmischungen

| Beispiel | Treibmittel-gehalt (1) | Weichmachendes Treibmittel (2) Gehalt | Aufschäumtemperatur °C, erstes Schäumen | Schüttdichte nach erstem Schäumen, g/l | Aufschäumtemperatur °C, zweites Schäumen | Schüttdichte nach zweitem Schäumen, g/l | Formkörperherstellung mit (bar) Dampfüberdruck | Formkörper-verschweißung % | Dichte des Formkörper g/l | Wärmeformbeständigkeit nach DIN 53 424 (Druckprüfung) °C |
|---|---|---|---|---|---|---|---|---|---|---|
| 1 | 8,6 % Pentan | 1,9 % Tetrahydrofuran | 101 | 50,4 | 106 | 41,8 | 1,2 | 70 % | 48,2 | 141 |
| 2 | 8,5 % Pentan | 1,4 % Tetrahydrofuran | 101 | 31,6 | 106 | 25,9 | 1,0 | 70 % | 29,8 | 125 |
| 3 | 9,4 % Pentan | 1,2 % Tetrahydrofuran | 101 | 20,7 | 106 | 15,5 | 0,8 | 80 % | 19,8 | 121 |
| 4 | 8,8 % Pentan | 0,3 % Tetrahydrofuran | 101 | 19,9 | 106 | 14,2 | 0,8 | 80 % | 18,2 | 115 |
| 5 | 7,8 % Pentan | 1,6 % Diisopropylether | 101 | 59,8 | 106 | 44,2 | 1,2 | 60 % | 42,8 | 155 |
| 6 | 7,4 % Pentan | 0,7 % Diisopropylether | 101 | 63,1 | 106 | 47,1 | 1,2 | 60 % | 46,2 | 153 |
| 7 | 7,6 % Pentan | 0,7 % Methylethylketon | 101 | 64,2 | 106 | 49,4 | 1,2 | 60 % | 48,2 | 154 |
| 8 | 7,4 % Pentan | 0,4 % Methylethylketon | 101 | 70,8 | 106 | 50,8 | 1,2 | 60 % | 49,7 | 152 |
| 9 | 8,2 % Pentan | 1,8 % n-Butylacetat | 101 | 60,5 | 106 | 44,3 | 1,2 | 70 % | 42,8 | 149 |
| 10 | 7,8 % Pentan | 0,8 % n-Butylacetat | 101 | 64,3 | 106 | 46,2 | 1,2 | 60 % | 45,1 | 151 |
| Vergleichsbeispiel 11 | 7,4 % Pentan | | 101 | 87,4 | 106 | 71,2 | 1,4 | 20 % | 70,6 | 153 |

EP 0 343 473 B1

Beispiele 12 bis 14

In ein druckfestes Rührgefäß werden eingefüllt: 270 Teile Wasser, 6 Teile des Dispergierhilfsmittels Tricalciumphosphat und 0,03 Teile Natriumdodecylbenzolsulfonat als Tensid. Unter Rühren gibt man 100 Teile einer auf ein Teilchengewicht von 1,7 mg granulierten Polymermischung aus 60 Gew.% Polyphenylenether und 40 Gew.% eines schlagfesten Polystyrols, das 9 % Butadienkautschuk enthält, zu. Die Polymermischung besitzt einen Schmelzindex von 7 [g/10'], gemessen bei 250°C/21,6 kg.

Nach Zugabe der angegebenen weichmachenden Treibmittelkomponente c2 preßt man 21 Teile n-Butan auf, heizt auf die angegebene Imprägniertemperatur und hält diese 30 min lang. Unter Nachpressen von Stickstoff entspannt man den Gefäßinhalt bei dieser Temperatur innerhalb eniger Stunden in eine Auffanggefäß.

Die entstandenen Schaumpartikel werden zur Entfernung des Tricalciumphosphats mit Salpetersäure behandelt, schließlich neutral gewaschen und getrocknet.

| Beispiel | Teile | Treibmittel c2 | Imprägnier-temperatur °C | Schüttdichte | |
|---|---|---|---|---|---|
| | | | | sofort | durch Nach-schäumen g/l |
| 12 (Vergleich) | - | - | 177 | 115 | - |
| 13 | 5 | i-Butanol | 177 | 84 | 58 |
| 14 | 5 | i-Propanol | 185 | 50 | 35 |

Die direkt entstandenen Schaumpartikel lassen sich in einem auf 170°C vorgeheizten Verschäumer mit überhitztem Wasserdampf von 175°C in 1,5 min zu niedrigeren Schüttdichten nachschäumen.

Beispiele 15 bis 17

Man arbeitet wie in Beispiel 12 bis 14, verwendet aber eine Polymermischung aus 75 Gew.% Polyphenylenether und Polystyrol mit einem Schmelzindex von 2,4 [g/10'].

| Beispiel | Teile | Treibmittel c2 | Imprägnier-temperatur °C | Schüttdichte g/l |
|---|---|---|---|---|
| 15 (Vergleich) | - | - | 195 | 128 |
| 16 | 1 | p-Xylol | 195 | 63 |
| 17 | 1 | p-Xylol | 206 | 52 |

Beispiele 18 bis 21

In ein druckfestes Rührgefäß werden eingefüllt. 180 Teile filtriertes Serum aus einer mit Polyvinylpyrrolidon als Tensid durchgeführten Polystyrol-Suspensionpolymerisation; darin sind noch 0,8 Gew.% Styrol-Emulsionspolymerisat enthalten. Man setzt 0,2 Teile Natriumpyrophosphat und 100 Teile der in den Beispielen 12 bis 14 beschriebenen, granulierten Polymermischung aus Polyphenylenether und schlagfestem Polystyrol zu. Man gibt als Treibmittel c1 14 Teile n/i-Pentangemisch (75/25) bzw. n-Heptan sowie gegebenenfalls weichmachendes Treibmittel c2 zu. Unter Rühren heizt man z.B. auf 235°C und hält diese Temperatur 30 min lang. Nach Abkühlung werden die schaumfähigen Perlen mit Wasser gewaschen und getrocknet.

Sie werden in einem auf 170°C vorgeheizten Vorschäumer mit durchströmenden, auf 175°C überhitzten Wasserdampf in 2 min aufgeschäumt.

| Beispiel | Treibmittel c1 | Teile | Treibmittel c2 | Imprägnier-temperatur °C | Treibmittelgehalt d. Perlen Gew.% | Schüttdichte (g/l) nach Vorschäumen mit Wasserdampf von 175°C |
|---|---|---|---|---|---|---|
| 18 (Vergleich) | Pentan | - | - | 235 | 7,9 | 41 |
| 19 | Pentan | 4 | i-Propanol | 210 | 7,1 | 38 |
| 20 (Vergleich) | Heptan | - | - | 235 | 10,8 | 30 |
| 21 | Heptan | 4 | Ethanol | 208 | 9,4 | 32 |

Die nach den Beispielen 13, 14, 15, 17 bis 21 erhaltenen Schaumstoffpartikeln werden in auf 170 bis 180°C vorgeheizten, nicht gasdichten Formen mit auf 175°C überhitztem Wasserdampf während 3 min in Formteile überführt. Die Hohlräume zwischen den kugelförmigen Teilchen werden dabei ausgeschäumt. Je nach Füllgrad der Form werden dabei Formteile mit Rohdichten erhalten, die bis 10 % unterhalb oder bis 20 % oberhalb der eingesetzten Schüttdichte liegen, d.h zwischen 25 und 80 g/l.

So besitzt z.B. ein aus Schaumstoffpartikeln der Schüttdichte 50 g/l (Versuch 14) hergestelltes Formteil der Rohdichte 55 g/l eine Druckspannung bei 10 % Stauchung von 0,4 MPa (DIN 53 421) und eine Formbeständigkeit in der Wärme von 171°C (DIN 53 424).

**Patentansprüche**

1. Expandierbare Polymere in Partikelform, enthaltend
    a) 20 bis 94,9 Gew.% eines Styrolpolymerisats,
    b) 0,1 bis 75 Gew.% eines Polyphenylenethers,
    c) 5 bis 20 Gew.% eines Treibmittelgemisches aus
        c1) aliphatischen oder cycloaliphatischen gesättigten Kohlenwasserstoffen mit 3 bis 7 C-Atomen und
        c2) einem aromatischen gesättigten Kohlenwasserstoff mit 7 bis 8 C-Atomen,
        einem Alkohol mit 2 bis 4 C-Atomen,
        einem Keton mit 3 bis 5 C-Atomen,
        einem cyclischen Ether mit 4 bis 6 C-Atomen,
        einem aliphatischen Ether mit 4 bis 6 C-Atomen,
        einem Ester mit 4 bis 6 C-Atomen und/oder
        einem Chlorkohlenwasserstoff mit 1 bis 2 C-Atomen und 2 bis 3 Chloratomen
        im Gewichtsverhältnis c1:c2 zwischen 50:1 und 1:1, sowie gegebenenfalls
    d) übliche Zusatzstoffe in wirksamen Mengen.

2. Expandierbare Polymere in Partikelform gemäß Anspruch 1, gekennzeichnet durch einen mittleren Durchmesser der Partikel zwischen 0,2 und 4 mm.

3. Expandierbare Polymere in Partikelform gemäß Ansprüchen 1 und 2, gekennzeichnet durch einen Gehalt an der Komponente a) von 30 bis 93 Gew.% und an der Komponente b) von 2 bis 65 Gew.%.

4. Verfahren zur Herstellung von expandierbaren Polymeren in Partikelform gemäß Ansprüchen 1 bis 3, dadurch gekennzeichnet, daß man ein inniges Gemisch aus a) einem Styrolpolymerisat, b) einem Polyphenylenether und gegebenenfalls d) üblichen Zusatzstoffen in wirksamen Mengen, in Partikelform in wäßriger Suspension mit c) einem Treibmittelgemisch aus
    c1) aliphatischen oder cycloaliphatischen gesättigten Kohlenwasserstoffen mit 3 bis 7 C-Atomen und
    c2) einem aromatischen gesättigten Kohlenwasserstoff mit 7 bis 8 C-Atomen,

9

einem Alkohol mit 2 bis 4 C-Atomen,

einem Keton mit 3 bis 5 C-Atomen,

einem cyclischen Ether mit 4 bis 6 C-Atomen,

einem aliphatischen Ether mit 4 bis 6 C-Atomen,

einem Ester mit 4 bis 6 C-Atomen und/oder

einem Chlorkohlenwasserstoff mit 1 bis 2 C-Atomen und 2 bis 3 Chloratomen

bei einer Temperatur von 100 bis 250°C und erhöhtem Druck imprägniert.

5. Verfahren zur Herstellung von Schaumstoffpartikeln der Dichte 5 bis 200 kg/m$^3$, dadurch gekennzeichnet, daß man ein inniges Gemisch aus a) einem Styrolpolymerisat, b) einem Polyphenylenether und gegebenenfalls d) üblichen Zusatzstoffen in wirksamen Mengen, in Partikelform in wäßriger Suspension mit c) einem Treibmittelgemisch aus

c1) aliphatischen oder cycloaliphatischen gesättigten Kohlenwasserstoffen mit 3 bis 7 C-Atomen und

c2) einem aromatischen gesättigten Kohlenwasserstoff mit 7 bis 8 C-Atomen,

einem Alkohol mit 2 bis 4 C-Atomen,

einem Keton mit 3 bis 5 C-Atomen,

einem cyclischen Ether mit 4 bis 6 C-Atomen,

einem aliphatischen Ether mit 4 bis 6 C-Atomen,

einem Ester mit 4 bis 6 C-Atomen und/oder

einem Chlorkohlenwasserstoff mit 1 bis 2 C-Atomen und 2 bis 3 Chloratomen

bei einer Temperatur von 100 bis 250°C und erhöhtem Druck imprägniert und anschließend entweder die heiße Suspension in eine Atmosphäre niederen Drucks entspannt oder nach dem Abkühlen der Suspension die treibmittelhaltigen Partikel abtrennt und durch Behandeln mit einem heißen Gas aufschäumt.

## Claims

1. An expandable polymer in particle form, containing

a) from 20 to 94.9% by weight of a styrene polymer,

b) from 0.1 to 75% by weight of a polyphenylene ether,

c) from 5 to 20% by weight of a blowing agent mixture consisting of

c1) aliphatic or cycloaliphatic saturated hydrocarbons of 3 to 7 carbon atoms and

c2) an aromatic saturated hydrocarbon of 7 or 8 carbon atoms,

an alcohol of 2 to 4 carbon atoms,

a ketone of 3 to 5 carbon atoms,

a cyclic ether of 4 to 6 carbon atoms,

an aliphatic ether of 4 to 6 carbon atoms,

an ester of 4 to 6 carbon atoms and/or

a chlorohydrocarbon of 1 or 2 carbon atoms and 2 or 3 chlorine atoms

in a weight ratio of c1 : c2 of from 50 : 1 to 1 : 1, with or without

d) conventional additives in effective amounts.

2. An expandable polymer in particle form as claimed in claim 1, which has a mean particle diameter of from 0.2 to 4 mm.

3. An expandable polymer in particle form as claimed in claim 1 or 2, which contains from 30 to 93% by weight of component a) and from 2 to 65% by weight of component b).

4. A process for the preparation of an expandable polymer in particle form as claimed in any of claims 1 to 3, wherein an intimate mixture of a) a styrene polymer, b) a polyphenylene ether and, if required, d) conventional additives in effective amounts, in particle form in aqueous suspension, is impregnated with c) a blowing agent mixture consisting of

c1) aliphatic or cycloaliphatic saturated hydrocarbons of 3 to 7 carbon atoms and

c2) an aromatic saturated hydrocarbon of 7 or 8 carbon atoms,

an alcohol of 2 to 4 carbon atoms,

a ketone of 3 to 5 carbon atoms,

a cyclic ether of 4 to 6 carbon atoms,

an aliphatic ether of 4 to 6 carbon atoms,

an ester of 4 to 6 carbon atoms and/or

a chlorohydrocarbon of 1 or 2 carbon atoms and 2 or 3 chlorine atoms

at from 100 to 250°C and under superatmospheric pressure.

5. A process for the preparation of foam particles having a density of from 5 to 200 kg/m$^3$, wherein an intimate mixture of a) a styrene polymer, b) a polyphenylene ether and, if required, d) conventional additives in effective amounts, in particle form in aqueous suspension, is impregnated with c) a blowing agent mixture consisting of

c1) aliphatic or cycloaliphatic saturated hydrocarbons of 3 to 7 carbon atoms and

c2) an aromatic saturated hydrocarbon of 7 or 8 carbon atoms,

an alcohol of 2 to 4 carbon atoms,

a ketone of 3 to 5 carbon atoms,

a cyclic ether of 4 to 6 carbon atoms,

an aliphatic ether of 4 to 6 carbon atoms,

an ester of 4 to 6 carbon atoms and/or

a chlorohydrocarbon of 1 or 2 carbon atoms and 2 or 3 chlorine atoms

at from 100 to 250°C and under superatmospheric pressure, and thereafter either the hot suspension is let down into an atmosphere under low pressure or the suspension is cooled and the particles that contain blowing agent are then isolated and expanded by treatment with a hot gas.

## Revendications

1. Polymères expansibles, sous forme de particules, contenant

a) 20 à 94,9 % en poids d'un polymérisat de styrène,

b) 0,1 à 75 % en poids d'un polyphénylène-éther,

c) 5 à 20 % en poids d'un mélange d'agents de gonflement, composé

c1) d'hydrocarbures saturés aliphatiques ou cycloaliphatiques, à 3 à 7 atomes C, et

c2) d'un hydrocarbure saturé aromatique, à 7 ou 8 atomes C,

d'un alcool à 2 à 4 atomes C,

d'une cétone à 3 à 5 atomes C,

d'un éther cyclique à 4 à 6 atomes C,

d'un éther aliphatique à 4 à 6 atomes C,

d'un ester à 4 à 6 atomes C et/ou

d'un hydrocarbure chloré à 1 ou 2 atomes C et 2 ou 3 atomes de chlore,

en un rapport en poids c1/c2 compris entre 50/1 et 1/1, ainsi que, éventuellement,

d) des additifs usuels en quantités efficaces.

2. Polymères expansibles, sous forme de particules, selon la revendication 1, caractérisés par un diamètre moyen des particules compris entre 0,2 et 4 mm.

3. Polymères expansibles, sous forme de particules, selon les revendications 1 et 2, caractérisés par une teneur en composant a) de 30 à 93 % en poids et en composant b) de 2 à 65 % en poids.

4. Procédé de préparation de polymères expansibles, sous forme de particules, selon les revendications 1 à 3, caractérisé par le fait que l'on imprègne, à une température de 100 à 250 degrés C et sous pression, un mélange intime sous forme de particules, composé a) d'un polymérisat de styrène, b) d'un polyphénylène-éther et, éventuellement, d) d'additifs usuels en quantités efficaces, en suspension aqueuse, avec c) un mélange d'agents de gonflements, composé

c1) d'hydrocarbures saturés aliphatiques ou cycloaliphatiques, à 3 à 7 atomes C, et

c2) d'un hydrocarbure saturé aromatique, à 7 ou 8 atomes C,

d'un alcool à 2 à 4 atomes C,

d'une cétone à 3 à 5 atomes C,

d'un éther cyclique à 4 à 6 atomes C,

d'un éther aliphatique à 4 à 6 atomes C,

d'un ester à 4 à 6 atomes C et/ou

d'un hydrocarbure chloré à 1 ou 2 atomes C et 2 ou 3 atomes de chlore.

5. Procédé de préparation de particules alvéolaires d'un densité de 5 à 200 kg/m$^3$, caractérisé par le fait que l'on imprègne, à une température comprise entre 100 et 250 degrés C et sous pression, un mélange intime sous forme de particules, composé a) d'un polymérisat de styrène, b) d'un polyphénylène-éther et, éventuellement, d) d'additifs usuels en quantités efficaces, en suspension aqueuse, avec c) un mélange d'agents de gonglements, composé

    c1) d'hydrocarbures saturés aliphatiques ou cycloaliphatiques, à 3 à 7 atomes C, et

    c2) d'un hydrocarbure saturé aromatique, à 7 ou 8 atomes C,

    d'un alcool à 2 à 4 atomes C,

    d'une cétone à 3 à 5 atomes C,

    d'un éther cyclique à 4 à 6 atomes C,

    d'un éther aliphatique à 4 à 6 atomes C,

    d'un ester à 4 à 6 atomes C et/ou

    d'un hydrocarbure chloré à 1 ou 2 atomes C et 2 ou 3 atomes de chlore,

ensuite, ou bien on fait se détendre la suspension chaude dans une atmosphère de plus basse pression, ou bien, après refroidissement de la suspension, on sépare les particules contenant les agents de gonflement et on provoque leur expansion par traitement avec un gaz chaud.